# EUROPEAN PATENT APPLICATION

(11) **EP 4 404 577 A1**
(43) Date of publication of application: **24.07.2024**
(21) Application number: 22869229.9
(22) Date of filing: 14.09.2022
(51) Int. Cl.: H04N 23/00

(54) **CAMERA STRUCTURE AND ASSEMBLY METHOD THEREFOR**

(30) Priority: 15.09.2021 CN 202111080075; 15.09.2021 CN 202122231739 U
(71) Applicant: Shanghai Yuxing Electronics Technology Co., Ltd, Shanghai 201702 (CN)
(72) Inventor: FU, Bingkai, Shanghai 201702 (CN)
(74) Representative: Franke, Dirk
(86) International application number: PCT/CN2022/118588
(87) International publication number: WO 2023/040860

(57) **Abstract**

The present invention relates to a camera structure and an assembly method thereof. The camera of the present invention includes a front housing (1), a middle housing (2) and a rear housing (3), which are sequentially connected; a first chamber (1.1) is formed between the front housing (1) and the middle housing (2), a second chamber (2.3) is formed between the middle housing (2) and the rear housing (3), a circuit board of the camera is mounted in the first chamber (1.1), the second chamber (2.3) is in direct or indirect communication with the outside of the camera, and the first chamber (1.1) and the second chamber are in communication via a moisture-proof structure (11). The present invention is advantageous in ensuring the safety of components during assembly, production and assembly, and facilitating the disassembly and replacement of components.

## Description

### Related Application

The present application claims priority to a Chinese patent application No. 202111080075.1 entitled "Assembly Method of a Camera Structure", filed on September 15, 2021 and to a Chinese Patent Application No. 202122231739.1 entitled "A Camera Structure", filed on September 15, 2021.

### Field of the Invention

The present invention relates to the field of cameras, and in particular to a camera structure and assembly method thereof.

### Background

At present, the camera needs to have the characteristics of heat dissipation, balanced air pressure, dust-proof, water-proof and anti-fog to make sure that the obtained images are clear, and once the camera temperature is too high, air pressure imbalanced, sucting in dust, water and so on, it will not only lead to a blurred image, but may even cause short circuit of the camera, burning out components, etc. Some improvements have also been proposed in the prior art to ensure that the camera image is clear, but it primarily with a single chamber configuration. Although some researchers have proposed the possibility of separating the chambers, a partition is often used to separate the inner cavity of the housing, a lens assembly is provided in one of the chambers, and a plurality of air flow passages and a plurality of air chambers are provided in the chamber, inducing that the lens assembly is difficult to mount and dismount, and is not conducive to reducing the volume of a camera.

### Summary

In view of the above-mentioned deficiencies of the prior art, the present invention provides a camera structure and an assembly method thereof, where the assembled camera housing is easy to mount and position, and the assembly is easy to disassemble and replace, the heat dissipation surface area thereof is large, and the safety and reliability of the camera are improved.

In order to achieve the above objective, the present invention provides the following solution:
in one aspect, the present invention provides a camera structure including a front housing, a middle housing, and a rear housing sequentially connected;
a first chamber is formed between the front housing and the middle housing, a second chamber is formed between the middle housing and the rear housing, a circuit board of the camera is mounted in the first chamber, the second chamber is in direct or indirect communicated/connected with the outside of the camera, and the first chamber and the second chamber are in communicated/connected via a moisture-proof structure.

Preferably, a middle portion of the front housing is projected toward a first direction which is a direction away from the middle housing, the middle portion has a division plate, and both the middle portion of the division plate and the middle portion of the rear housing are projected toward a second direction which is opposite to the first direction.

Preferably, the circuit board includes a first circuit board mounted on the front housing and a second circuit board mounted on the middle housing, the first circuit board being located at one end of the first chamber, and the second circuit board being located at the other end of the first chamber.

Preferably, the middle housing is provided with a moisture-proof structure mounting hole, and the moisture-proof structure includes a first cylindrical cylinder having one end open and the other end closed, and a first air flow cavity is formed therein; at least one vent is perforated on a side wall of the first cylindrical cylinder near the closed end, and each of the vents is covered with an elastic seal which can be opened when a pressure difference between the first air flow cavity and the second chamber exceeds a predetermined value.

Preferably, the elastic seal is a second cylindrical cylinder, where both ends of the second cylindrical cylinder are open and sleeved outside the closed end of the first cylindrical cylinder across the vent, a first end of the second cylindrical cylinder is in sealed and connected with the side wall of the first cylindrical cylinder, and the second end of the second cylindrical cylinder is in close contact with the side wall of the first cylindrical cylinder to form a second air flow cavity.

Preferably, the first end of the second cylindrical cylinder is made of a non-elastic material and the second end is made of an elastic material, or the thickness of the first end of the second cylindrical cylinder is greater than that of the second end, so that the first end is tightly clamped outside the first cylindrical cylinder and the second end can be expanded by the pressure difference between the first air flow cavity and the second chamber.

Preferably, the rear housing is mounted with a breather valve in which a waterproof breathable membrane is provided, and the middle housing is further provided with a return valve which is a one-way valve allowing air flow from the second chamber to the first chamber.

Preferably, the middle housing is provided with a connector near the second circuit board wherein one end of the connector is connected to the second circuit board and the other end is connected to the wire harness of the camera.

Preferably, the middle housing has a moisture-proof structure mounting hole in which the moisture-proof structure is press-fitted, and the outer circumference of the moisture-proof structure has a sealing device for sealing the connection between the moisture-proof structure and the middle housing.

In another aspect, the present invention provides an assembly method of a camera structure, wherein the camera structure includes a front housing, a middle housing, and a rear housing; the camera has a circuit board, and a moisture-proof structure mounting hole is provided in the middle housing; the assembly method of the camera structure includes:
S1: mounting a moisture-proof structure in the moisture-proof structure mounting hole;
S2: mounting a lens of the camera and a circuit board inside the front housing;
S3: providing the middle housing at a rear end of the front housing, and closing the front housing to form a first chamber; and
S4: providing a rear housing at rear end of the middle housing to seal the middle housing to form a second chamber, wherein the first chamber and the second chamber communicate with each other via the moisture-proof structure.

Preferably, the method further includes:
mounting a breather valve to the rear housing so that the rear housing can communicate/connect with the outside of the camera, where the breather valve has a waterproof membrane provided therein.

Preferably, the circuit board includes a first circuit board and a second circuit board, and the method further includes: fixing a lens of the camera at a front end of the front housing, then fixing the first circuit board inside the front housing, and fixing the second circuit board inside the middle housing so that a predetermined distance exists between the first circuit board and the circuit board when the front housing and the middle housing are fixed together.

Preferably, before the step S3, the method further includes: fixing a wire harness of the camera on the rear housing through a wire harness passage in the rear housing; connecting the wire harness to one end of a connector on the middle housing; and connecting the other end of the connector to the second circuit board passing through the middle housing.

Preferably, the step S 1 includes, at first, pressing the moisture-proof structure into the moisture-proof structure mounting hole by a pressing-in post; then, taking the pressing-in post out, placing a sealing device into the moisture-proof structure mounting hole, and pressing a riveting post down by the pressing-in post to rivet the moisture-proof structure in the moisture-proof structure mounting hole.

### Technical effects of the present invention

Compared with the prior art, the present invention breaks a single-chamber design concept of a conventional camera. In a camera, by means of the cooperation of a front housing, a middle housing and a rear housing, a first chamber and a second chamber are divided inside the camera; important components in the camera and main heat dissipation components, such as a circuit board, are fixedly mounted in the first chamber; a air flow passage is provided between the first chamber and the second chamber; and in particular, a moisture-proof structure with moisture-proof capability is used as the air flow passage, which not only ensures the heat dissipation and air pressure balance in the first chamber, but also realizes water-proof, dust-proof and water vapor-proof in the first chamber.

In a preferred implementation, the present invention separates the circuit structures of the camera into two circuit boards; and by fixing the first circuit board and the second circuit board separately, the total length and width of the circuit boards can be reduced, thereby reducing the volume of the camera. The circuit board is mounted on the middle housing protruding backwards, so that the second circuit board is not close to the middle housing when being mounted on the middle housing, inot only would not affecting the heat dissipation of the second circuit board, but also facilitating the use of a flexible connector to connect wire harness and the second circuit board, facilitating the solution of the connection problem of using different connectors.

In the camera structure of the present invention, by adopting a detachable structure composed of a front housing, a middle housing and a rear housing, the replacement of components in the camera is easily to perform.

### Brief Description of Drawings

FIG. 1 is a schematic diagram showing a camera according to an embodiment of the present invention;

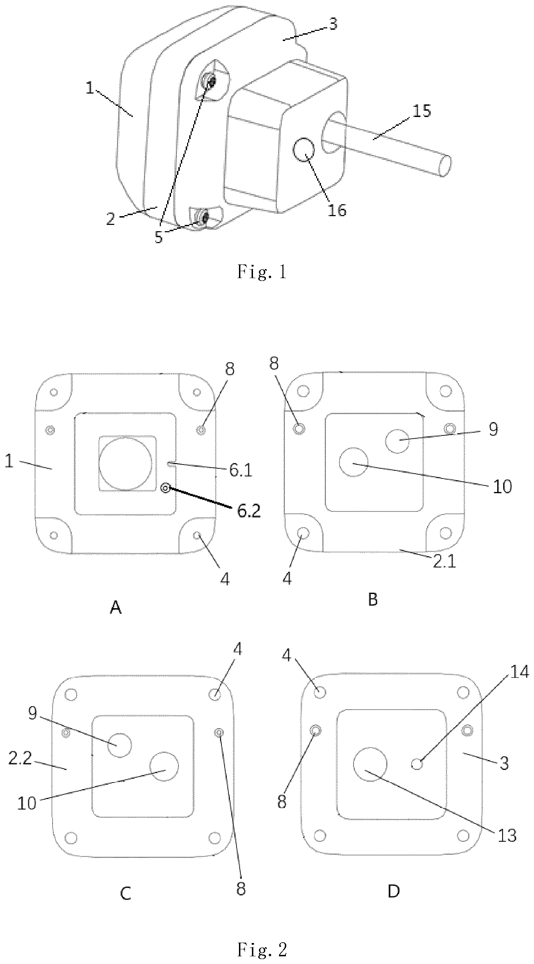

FIG. 2 is a schematic diagram showing the connection surfaces of a front housing, a middle housing and a rear housing according to an embodiment of the present invention, wherein FIG. 2A is a schematic diagram showing the connection surface on the front housing 1 (a right side view of the front housing), FIG. 2B is a schematic diagram showing the left side connection surface of the middle housing (a left side view of the middle housing), FIG. 2C is a schematic diagram showing the right side connection surface of the middle housing (a right side view of the middle housing), and FIG. 2D is a schematic diagram showing the connection surface of the rear housing (a left side view of the rear housing);
FIG. 3 is a perspective exploded schematic structural diagram of a camera according to an embodiment of the present invention;
FIG. 4 is a schematic diagram showing a position relationship between two PCB boards according to an embodiment of the present invention;
FIG. 5 is a sectional view of a camera structure according to an embodiment of the present invention;
FIG. 6 is a perspective exploded schematic structural diagram from another view of a camera according to an embodiment of the present invention;
FIG. 7 is a stereoscopic view showing a camera structure according to an embodiment of the present invention;
FIG. 8 is a schematic diagram showing a moisture-proof structure according to an embodiment of the present invention, wherein FIG. 8A is a schematic cross-sectional view of the moisture-proof structure (along its axis), FIG. 8B is a schematic stereoscopic view of the moisture-proof structure, FIG. 8C is a schematic stereoscopic view of a first cylindrical cylinder in the moisture-proof structure, and FIG. 8D is a schematic perspective view of the first cylindrical cylinder in the moisture-proof structure;
FIG. 9 is a schematic diagram showing a process of pressing a moisture-proof structure into a middle housing according to an embodiment of the present invention;
FIG. 10 is a schematic diagram showing the disassembly of the rivet of the moisture-proof structure according to an embodiment of the present invention;
FIG. 11 is a sectional view of a PCB board II, a connector, and a wire harness after they are connected together according to an embodiment of the present invention;
FIG. 12 is an assembly view of a moisture-proof structure and a connector mounted on a middle housing according to an embodiment of the present invention;
FIG. 13 is an sectional view of a camera structure after it is assembled according to an embodiment of the present invention.

Reference numerals: 1-front housing, 1.1-first chamber, 1.2-camera lens, 2-middle housing, 2.2-second connection surface, 2.3-second chamber, 3-rear housing, 4-screw fixing hole, 5-fixing screw, 6-PCB board I, 6.1-PCB board positioning structure, 7-PCB board II, 8-housing positioning structure, 9-moisture-proof structure mounting hole, 10-connector passage, 11-moisture-proof structure, 11.1-air flow cavity, 11.2-vent, 11.3-second cylindrical cylinder, 11.4-second air flow cavity, 11.5-first cylindrical cylinder, 12-connector, 13-wire harness passage, 14-breather valve hole, 15-harness, 16-breather valve, 17-lower pressing plate, 18-middle housing positioning post, 19-upper pressing plate, 20-pressing-in post, 20.1-pressing-in sleeve, 21-riveting post.

### Detailed Description of Embodiments

Below, in combination with the accompanying drawings and the embodiments of the present invention, implementations of the present invention are illustrated in detail. The following embodiments are intended to illustrate the present invention, but are not intended to limit the scope of the present invention.

The terms of upper, lower, left, right, inner, outer, front end, rear end, head, tail and the like in the present application document are described on the basis of the orientation or positional relationship shown in the drawings. If the drawings are different, the corresponding positional relationship may also change accordingly, and thus the scope of protection shall not be construed as limited thereby.

In the present invention, the terms "mounted", "connecting to", "connected", "connected with", "fixed", and the like are to be construed broadly, for example, it may be explained as a fixed connection, as a detachable connection, as an integral connection, as a mechanical connection, as an electrical connection, or as being in communication with each other, as a direct connection, as an indirect connection through an intermediary, as a communication between two components, or as an interaction between two components. The specific meaning of the above terms in the present invention can be understood by a person skilled in the art according to specific circumstances.

The present embodiment describes an assembly method of a camera structure, which is used for assembling a camera housing which is easy to mount and position, easy to disassemble and replace components, and has a large heat dissipation surface area.

As shown in FIGS. 1 and 2, the camera in the present embodiment includes three detachable parts: a front housing 1, a middle housing 2, and a rear housing 3. The front housing 1, the middle housing 2, and the rear housing 3 are hollow housings having a predetermined thickness, respectively, which are combined to form an integral housing of the camera. A middle portion of the front housing 1 protrudes outward in a forward direction, middle portions of both the middle housing 2 and the rear housing 3 protrude rearward, and a rear protruding portion of the middle housing 2 protrudes into the rear housing 3. The front housing 1, the middle housing 2, and the rear housing 3 are sequentially fixed together by fixing screws 5 to constitute a camera housing. The middle housing 2 has a transverse partition(plate) to divide the internal space of the camera into two chambers, i.e., a first chamber 1.1 is formed between the front housing 1 and the middle housing 2, while the first chamber 1.1 is used for mounting components such as a circuit board and a lens; and a second chamber 2.3 is formed between the middle housing 2 and the rear housing 3, while the second chamber 2.3 is a buffer chamber for the contacting of hot and cold air, so that the pressure difference between the inside and the outside of the camera can be better buffered, and at the same time, the heat dissipation volume is also enlarged. The circuit board of the camera is mounted in the first chamber 1.1, the second chamber 2.3 is in direct or indirect communication with the outside of the camera, and the first chamber 1.1 is in communication with the second chamber 2.3 via a moisture-proof structure 11. Between the front housing 1 and the middle housing 2, and between the middle housing 2 and the rear housing 3, sealing rings are preferably also provided, respectively, for sealing at the respective connection positions.

In the present embodiment, the circuit boards are all PCB boards, but a person skilled in the art can use other types of circuit boards without limitation.

A plurality of screw fixing holes 4 are uniformly distributed on the front housing 1, the middle housing 2 and the rear housing 3, respectively, and the position of the screw fixing holes 4 on the front housing 1, the middle housing 2 and the rear housing 3 are located corresponding to each other; the screw fixing holes 4 can all be through-holes; the screw fixing holes 4 on the front housing 1 can also be non-through threaded screw holes; and the screw fixing holes 4 on the middle housing 2 and the rear housing 3 are through-holes. A fixing screw 5 fixes the front housing 1, the middle housing 2, and the rear housing 3 in sequence through the screw fixing holes 4.

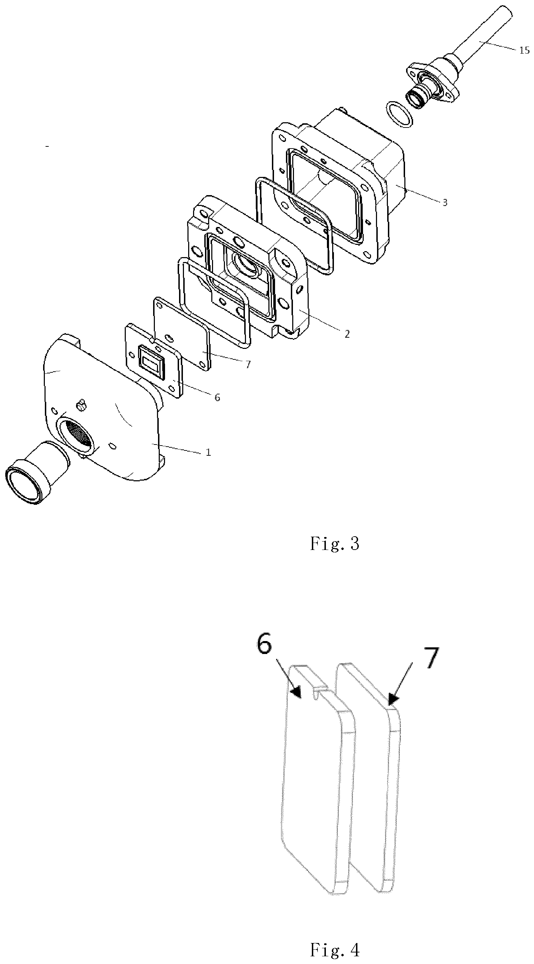

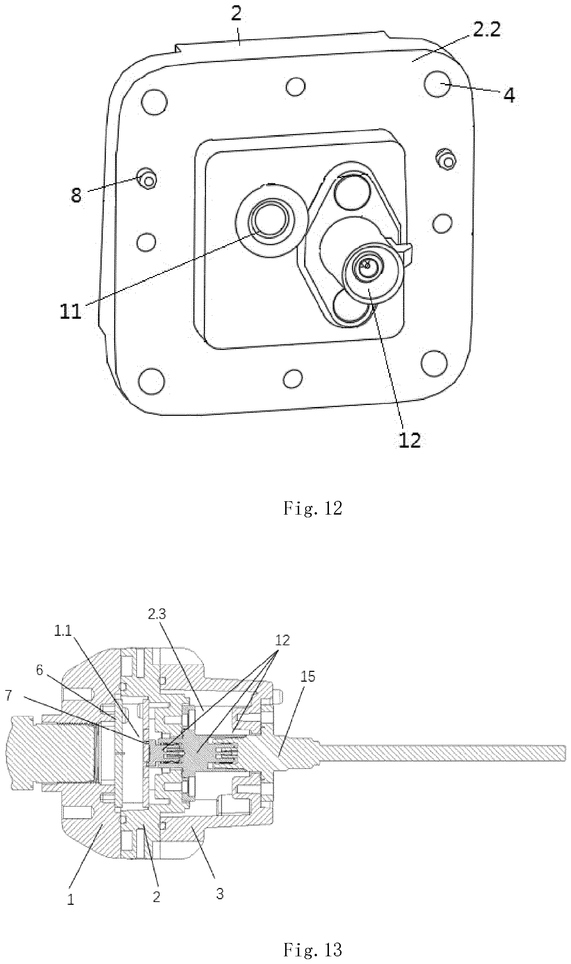

As shown in FIGS. 3 and 12, the two sides of the middle housing 2 are referred to as a first connection surface (the opposite side of 2.2 in the figure) and a second connection surface 2.2, respectively. The present embodiment will be described with reference to connection surface facing the front housing 1 as the first connection surface and the connection surface facing the rear housing 3 as the second connection surface 2.2.

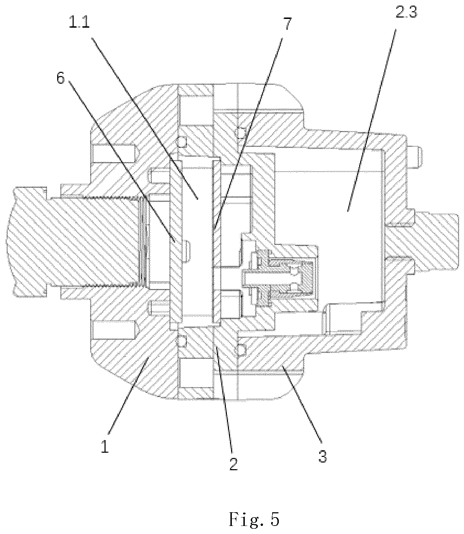

The first connection surface is recessed centrally, as shown in FIG. 5, towards the right, and has a stepped surface in the recess for mounting a circuit board, while the circuit board in the present embodiment consists of a PCB board I 6 and a PCB board II 7, as shown in FIG. 4. The second connection surface 2.2 is convex in the center, thereby greatly ensuring that a predetermined distance can be provided between the PCB board I 6 and the PCB board II 7 after the front housing 1 and the middle housing 2 are connected to satisfy the mounting and heat dissipation requirements of components such as an imaging processing module. In addition, a hollow secondary convex structure is provided on the convex surface of the second connection surface 2.2 for mounting the moisture-proof structure 11.

The PCB board I 6 and the front housing 1 are fixed and positioned via the PCB board positioning structures 6.1 and 6.2. The PCB board positioning structures 6.1 and 6.2 can adopt a plug-in combination structure including but not limited to a positioning post and a positioning hole, for example, a plurality of positioning holes are provided on the connection surface of the inner side of the front housing 1, a side surface of the PCB board I 6 has a positioning post matching the positioning holes, and the PCB board I (6) is plugged onto the front housing 1 via the positioning post, which is easy to disassemble. Similarly, the PCB board II 7 is inserted on a stepped surface inside the middle housing 2 by means of a corresponding positioning structure. Preferably, the PCB board II 7 is perforated or provided with air flow passages to allow air flow between the two chambers through the moisture-proof structure.

The PCB board II 7 maintains a certain gap with the middle housing 2, wherein the gap can prevent the PCB board II 7 from affecting the fixed state thereof due to the connection with the wire harness 15, protect the components and prevent the wear of the components, facilitate the passage and store of the connector 12, and can also ensure the heat dissipation of the PCB board II 7, and the PCB board I 6 and the PCB board II 7 are arranged in parallel. The PCB board I 6 and the PCB board II 7, which are arranged separately, can seperate different functional elements, and can reduce the length and width of the existing PCB board, facilitate the replacement and reduce the volume of the camera under the condition of ensuring the same function of the camera. The connection between the PCB board I 6 and the PCB board II 7 via a transmission module ensures the security and stability of data transmission. The transmission module may be a Flexible Printed Circuit (FPC), a connector, etc.

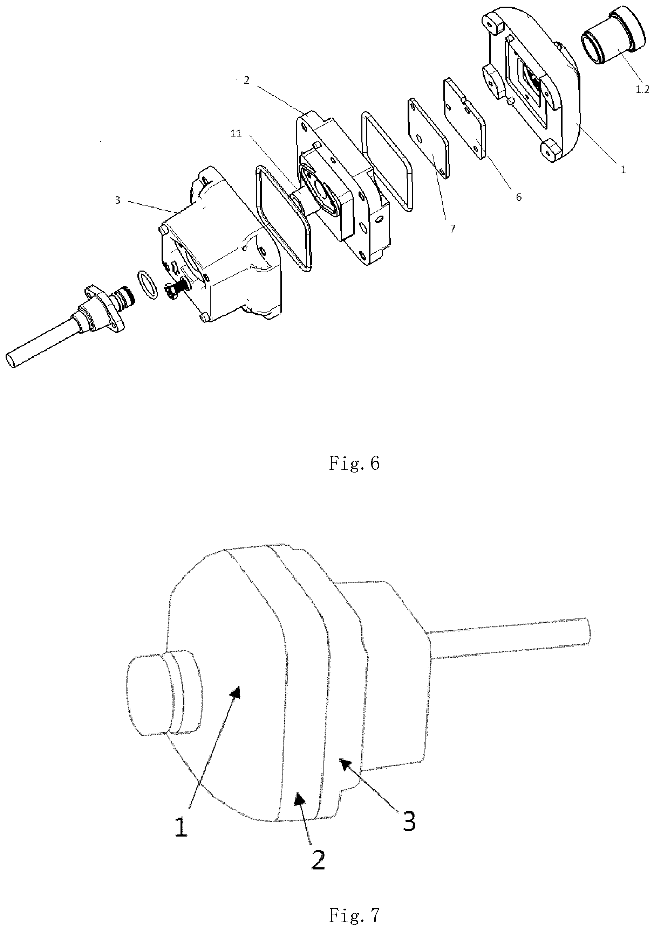

As shown in FIGS. 5 to 7, middle portion of the front end of the front housing 1 has a hollow cylindrical structure serving as a lens passage through which the lens of the camera protrudes into the front housing 1. An image sensor is arranged on the PCB board I 6. The image sensor is used to receive the image acquired by the lens.

In addition, the front housing 1 and the middle housing 2, and the middle housing 2 and the rear housing 3 are respectively positioned with each other via a plurality of housing positioning structures 8, i.e., matched positioning structures with the housing positioning structures 8 are respectively provided on the inner connection surface of the front housing 1, the two side surfaces of the middle housing 2 and the inner connection surface of the rear housing 3, and the positioning principle of the housing positioning structures 8 is the same as that of the PCB board positioning structures 6.1 and 6.2, for example, using the plug-in method with a positioning post and a positioning hole, i.e., the positioning post on one surface is inserted into the positioning hole on the contact surface.

As shown in FIG. 3, the middle housing 2 has a moisture-proof structure mounting hole 9 and a connector passage 10 for mounting a moisture-proof structure 11 and a connector 12, respectively. The connector passage 10 is provided with a sealing structure, such as a rubber plug, to achieve a sealing effect, and the shape of the connector passage 10 can be correspondingly arranged according to the form of the connector 12.

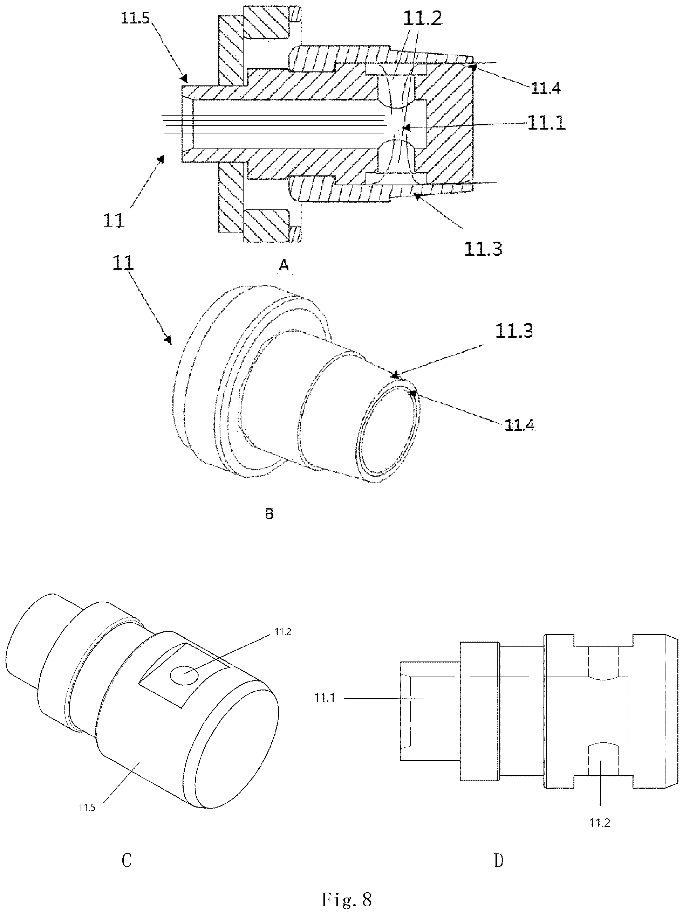

The moisture-proof structure 11 is mounted on the middle housing 2 through the second connection surface 2.2 of the middle housing 2. The moisture-proof structure 11 may be an existing moisture-proof element, or may be a moisture-proof structure according to an embodiment of the present invention. As shown in FIG. 8, the moisture-proof structure 11 in the present embodiment is a stepped cylindrical nested structure, and the moisture-proof structure 11 includes: a first cylindrical cylinder 11.5, and a second cylindrical cylinder 11.3, wherein one end (the left end in the figure) of the first cylindrical cylinder is open and the other end (the right end in the figure) is closed, with a first air flow cavity 11.1 is formed therein, and at least one vent 11.2 is perforated on the side wall of the first cylindrical cylinder 11.5 near the closed end. The second cylindrical cylinder 11.3 are open at both ends and sleeved outside the closed end of the first cylindrical cylinder 11.5 across the vent 11.2. One end (the left end in the figure) of the second cylindrical cylinder 11.3 is in sealed connection with the side wall of the first cylindrical cylinder 11.5, and the other end (the right end in the figure) is in close contact with the side wall of the first cylindrical cylinder 11.5 to form a second air flow cavity 11.4. When the pressure difference between the two ends of the second air flow cavity 11.4 reaches a certain level, the air flow is allowed to pass through, and the second cylindrical cylinder 11.3 is made of an elastic material, and preferably, the portion of the second cylindrical cylinder covering the vent 11.2 is made of an elastic material. That is, the moisture-proof structure of the present invention has two single-sided open air flow cavities at the inside and the outside, the first air flow cavity 11.1 at the inside is arranged in the center of the moisture-proof structure 11, one end of the air flow cavity 11.1 is open, the other end thereof is closed, the open end thereof faces the PCB board II 7, and the closed end thereof is arranged on the second connection surface 2.2 of the middle housing 2. The moisture-proof structure 11 is symmetrically provided with vents 11.2 near the closed end.

In the present embodiment, a second cylindrical cylinder 11.3 is provided outside the moisture-proof structure 11 to serve as a turbulence hood for changing the gas flow direction and narrowing the air flow passage, and an annular groove is provided on the outer surface of the first cylindrical cylinder 11.5 to clamp the second cylindrical cylinder 11.3. The first end (the left end in the figure) of the second cylindrical cylinder 11.3 has an annular protrusion matched with the annular groove, which protrudes towards the inside of the cylinder to protrude into the annular groove of the outer surface of the first cylindrical cylinder 11.5 to achieve relative fixation therebetween. The second end of the second cylindrical cylinder 11.3 has a smaller thickness than the first end and the second end of the second cylindrical cylinder 11.3 covers the vent 11.2 to form a second air flow cavity 11.4. The left end of the second air flow cavity 11.4 is closed, and the second cylindrical cylinder 11.3 is made of an elastic material, so that the right end of the second air flow cavity 11.4 can be pressurized and expanded, and then opened, with the open end of the second air flow cavity 11.4 facing the second chamber 2.3, thereby forming a air flow passage connecting the first chamber 1.1 and the second chamber 2.3 by the first air flow cavity 11.1 on the inner side, the vent 11.2 and the second air flow cavity 11.4 on the outer side.

Preferably, a return valve is further arranged in the middle housing 2 and is an elastic valve body opening in one way towards the first chamber 1.1. The return valve is opened after the pressure in the second chamber 2.3 is greater than a predetermined value in the first chamber 1.1, and the return valve is continuously kept closed when the pressure difference between the second chamber 2.3 and the first chamber 1.1 is less than or equal to the predetermined value, and the return valve can be mounted on the middle housing at a side of the moisture-proof structure.

During the operation of the camera, it generates high temperature, which causes the gas pressure in the first chamber 1.1 to rise, a pressure difference is formed between the first chamber 1.1 and the second chamber 2.3.The air flow, after encountering an obstacle in the first air flow cavity 11.1 of the moisture-proof structure 11, flows out from the vent 11.2, flows slowly to the second chamber 2.3 through the second air flow cavity 11.4 on the outside, and gradually balances the pressure in the first chamber 1.1 and the second chamber 2.3 to prevent damage to components therein. After the camera cools down, the air pressure in the first chamber 1.1 decreases, and the air in the second chamber 2.3 flows into the first chamber 1.1 through the return valve until the pressures in the first chamber 1.1 and the second chamber 2.3 are balanced.

In addition, a waterproof breathable membrane is arranged at the position of the vent 11.2 in the moisture-proof structure 11 or at the position in front of the first air flow cavity 11.1 in the inner side passes through the vent 11.2, so as to prevent water vapor, water and dust in the second chamber 2.3 from entering the first chamber 1.1, so that the air in the first chamber 1.1 can be smoothly discharged, and the air in the second chamber 2.3 can also smoothly enter the first chamber 1.1 through the return valve, and the air pressure in the first chamber 1.1 and the second chamber 2.3 can be effectively balanced, and can implement water vapor-proof, water-proof and dust-proof.

A connector 12 is mounted in the middle housing 2 via a connector passage 10 for connecting to a wire harness 15 of the camera.The wire harness 15 may include both a data connection line and a power connection line. By connecting the circuit board to the data connection line through the connector 12, the stability of high-speed data transmission can be ensured without attenuation. The connector 12 in the present embodiment may be a rigid connector, such as an axial connector or a FARKA version ferrule coaxial connector, or a flexible connector, such as a flexible circuit board.

A harness passage 13 and a breathable valve hole 14 are arranged on the rear housing 3, as shown in FIG. 2. A wire harness 15 is connected to the connector 12 through the harness passage 13, and a breathable valve 16 is mounted on the rear housing 3 through the breather valve hole 14. The breathable valve 16 is used for preventing water vapor, dust and water from the external environment from entering the second chamber 2.3, at the same time, the air in the second chamber 2.3 can be smoothly discharged, and the external air can also smoothly enter the second chamber 2.3, effectively balancing the air pressure inside and outside the camera, and can implement water vapor-proof, water-proof and dust-proof.

A waterproof breathable membrane can also be arranged on the rear housing 3, wherein the waterproof breathable membrane is arranged in the breathable valve hole 14 and inside the breathable valve 16. The waterproof breathable membrane on the rear housing 3 cooperates with the waterproof breathable membrane in the moisture-proof structure 11, so that a slow balance of pressure between the first chamber 1.1, the second chamber 2.3 and the atmospheric environment outside the camera can be effectively achieved, and components can be protected, achiving more effectively water vapor-proof, water-proof and dust-proof.

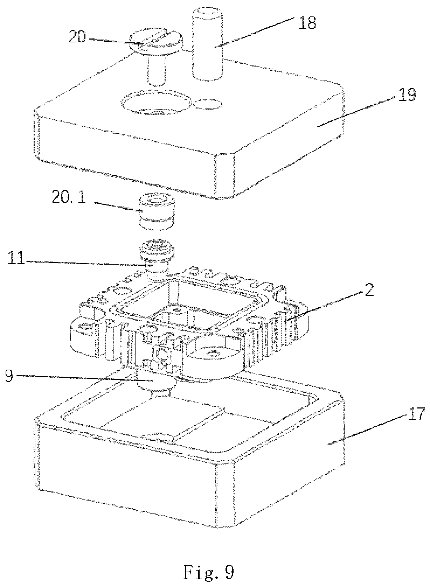

Further, preferably, as shown in FIGS. 9-10, a plurality of heat dissipation fins are uniformly distributed outside the middle housing 2. More preferably, the outer sides of the front housing 1, the middle housing 2, and the rear housing 3 are uniformly distributed with a plurality of heat dissipation fins for enlarging a heat dissipation surface area.

In the present embodiment, the connection between the connector 12 and the wire harness 15, and the connection between a transmission module and the PCB board I 6 and the PCB board II 7 can all use plug-in connection with a male/female connector or other quick connection to facilitate disassembly. The plug-in connection is illustrated below. The connector 2 has a female/male connector at one end and a male/female connector at the other end, the wire harness 15 has a male/female connector at its end which matches the connection end of the connector 12, and a female/male connector is provided on the middle housing 2 or the PCB board II 7. The connector 12, the wire harness 15 and the male/female connectors on the middle housing 2 and the PCB board II 7 may adopt the same or different male/female connectors, and is not strictly limited here, but merely need to be capable of mating connection.

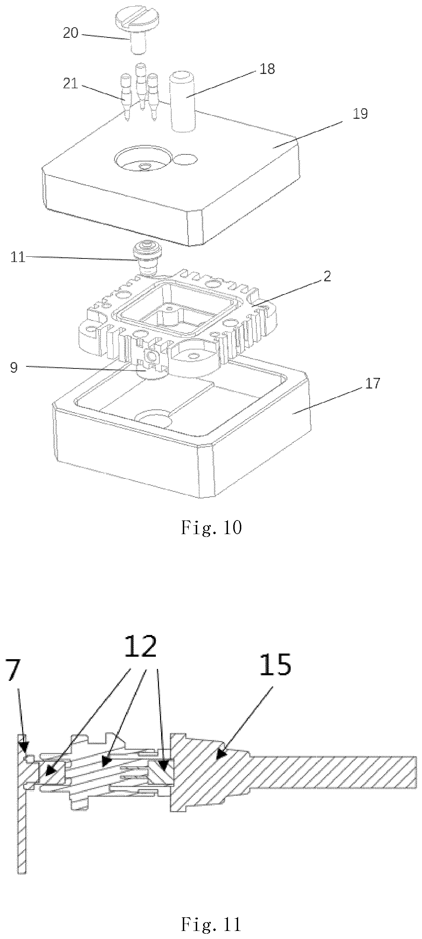

The camera structure is assembled as follows:
S 1: a moisture-proof structure 11 is press-fitted into a moisture-proof structure mounting hole 9 in the middle housing 2;
   (1) the moisture-proof structure 11 is pressed into the middle housing 2;
      the middle housing 2 has a positioning hole. the lower pressing plate 17 has a hollow housing structure with an open top. When assembling, as shown in FIG. 9, the lower pressing plate 17 is kept still, the middle housing 2 is placed into the lower pressing plate 17, and the middle housing 2 is positioned by threading a middle housing positioning post 18 on the lower pressing plate 17 through a positioning hole of the middle housing 2; after the middle housing 2 is fixed, the moisture-proof structure 11 is placed into the moisture-proof structure mounting hole 9 of the middle housing 2. The bottom of the upper pressing plate 19 is a hollow structure and buckles on the lower pressing plate 17. The middle housing 2 is placed between the upper pressing plate 19 and the lower pressing plate 17; and the upper pressing plate 19 is driven to press the middle housing 2 by means of the pressing post 20 located above the moisture-proof structure 11. A pressing-in sleeve 20.1 is provided on the lower end of the pressing-in post 20, and the diameter of the pressing-in sleeve 20.1 is the same as that of the contact surface of the moisture-proof structure 11, so that the pressure can be evenly distributed on the moisture-proof structure 11, to facilitate that the moisture-proof structure 11 is evenly pressed into the moisture-proof structure mounting hole 9, and the pressing-in post 20 moves down to press the moisture-proof structure 11 to a predetermined position in the moisture-proof structure mounting hole 9;
   (2) Riveting of the moisture-proof structure 11;
      Loosening the pressing-in post 20, lifting up the upper pressing plate 19, taking out the pressing-in sleeve 20.1, and placing a sealing device above the moisture-proof structure 11 in the moisture-proof structure mounting hole 9, as shown in FIG. 10; placing a plurality of riveting posts 21 on the sealing device, pressing the pressing-in post 20 down to push the riveting posts 21 downwards to press the sealing device, so that the moisture-proof structure 11 is riveted in the moisture-proof structure mounting hole 9 to fix the moisture-proof structure 11 and ensure the sealing performance;
S2: mounting a breathable valve 16 is in the breathable valve hole 14 on the rear housing 3;
S3: fixing the wire harness 15 on the rear housing 3 passing through the harness passage 13 in the rear housing 3;
S4: at the rear housing 3, if the connector 12 is a flexible connector, as shown in FIG. 11, the female/male connector at one end of the connector 12 is connected to the male/female connector of the wire harness 15, and the male/female connector at the other end of the connector 12 passes through the middle housing 2 via the connector passage 10 and is fixedly connected to the side of the PCB board II 7 facing the middle housing 2.
   If the connector 12 is a rigid connector, as shown in FIG. 12, a female/male connector at one end of the connector 12 is connected to a male connector/female connector of the wire harness 15, and the male/female connector at the other end of the connector 12, after passing through the connector passage 10, is connected to the female/male connector provided on the middle housing 2, and at this moment, the middle housing 2 is connected to the PCB board II 7 via a data transmission circuit;
   In the present embodiment, the shape of the connector passage 10 is not limited, only if it is suitable for the connector 12 to pass through, for example: when the connector 12 is a flexible circuit board, the connector passage 10 is an elongated passage; when the connector 12 is an axial connector, the connector passage 10 is a circular passage;
S5: positioning the middle housing 2 related to the rear housing 3 via the connector 12 and/or the housing positioning structure 8, and the middle housing 2 and the rear housing 3 are connected via screws;
S6: fixing the PCB board II 7 on the stepped surface in the middle housing 2 via the PCB board positioning structure, wherein a gap with a predetermined spacing is left between the PCB board II 7 and the second connection surface 2.3, and the predetermined spacing is the same as the length of the connection part of the connector 12;
S7: as shown in FIG. 13, a imaging end of the lens passes through a len passage of the front housing 1 and is fixed in the front housing 1, and the collecting end of lens is located at the outer end of the front housing 1; the PCB board I 6 is fixed on the inner side of the front housing 1 via PCB board positioning structures 6.1 and 6.2, and components such as an image sensor are mounted on the PCB board I 6; the imaging end of lens is connected to image sensor data;
S8: connecting the PCB board I 6 and the PCB board II 7 via a transmission module;
S9: the front housing 1 and the middle housing 2 are firstly connected by positioning and limiting via the housing positioning structure 8; then, a fixing screw 5 penetrates through a through-hole type screw fixing hole 4 of the rear housing 3 and the middle housing 2 successively, and the fixing screw 5 is screwed into a threaded screw fixing hole 4 of the front housing 1 to lock and fix the front housing 1, the middle housing 2 and the rear housing 3.

While the principles of the present invention have been described in detail in connection with preferred embodiments thereof, it will be appreciated by a person skilled in the art that the above-described embodiments are merely illustrative of exemplary implementations of the present invention, and are not intended to limit the scope of the present invention. The details of the embodiments are not to be construed as limiting the scope of the present invention, and any obvious variations thereof, such as equivalent alterations, simple substitutions, and the like, may be made without departing from the spirit and scope of the present invention.

## Claims

1. A camera structure, wherein it comprises a front housing, a middle housing and a rear housing, which are sequentially connected;
a first chamber is formed between the front housing and the middle housing, a second chamber is formed between the middle housing and the rear housing, a circuit board of the camera is mounted in the first chamber, the second chamber is in direct or indirect communication with the outside of the camera, and the first chamber and the second chamber are in communication via a moisture-proof structure.

2. The camera structure according to claim 1, wherein a middle portion of the front housing is projected toward a first direction which is a direction away from the middle housing; the middle housing has a division plate, and both the middle portion of the division plate and the middle portion of the rear housing are projected toward a second direction which is opposite to the first direction.

3. The camera structure according to claim 1, wherein the circuit board includes a first circuit board mounted on the front housing and a second circuit board mounted on the middle housing, the first circuit board and the second circuit board being located at two ends of the first chamber, respectively.

4. The camera structure according to claim 1, wherein the middle housing is provided with a moisture-proof structure mounting hole, wherein the moisture-proof structure comprises a first cylindrical cylinder having one end open and the other end closed, and a first air flow cavity is formed in the the moisture-proof structure; at least one vents are perforated on side wall of the first cylindrical cylinder near the closed end, and each of the vents is covered with an elastic seal which can be opened when a pressure difference between the first air flow cavity and the second chamber exceeds a predetermined value.

5. The camera structure according to claim 4, wherein the elastic seal is a second cylindrical cylinder, while both ends of the second cylindrical cylinder are open and sleeved outside the closed end of the first cylindrical cylinder across the vent, a first end of the second cylindrical cylinder is in sealed connection with the side wall of the first cylindrical cylinder, and the second end thereof is in close contact with the side wall of the first cylindrical cylinder to form a second air flow cavity.

6. The camera structure according to claim 5, wherein the first end of the second cylindrical cylinder is made of a non-elastic material and the second end of the second cylindrical cylinder is made of an elastic material, or the thickness of the first end of the second cylindrical cylinder is greater than the thickness of the second end of the second cylindrical cylinder, so that the first end of the second cylindrical cylinder is tightly clamped outside the first cylindrical cylinder and the second end of the second cylindrical cylinder can be expanded by the pressure difference between the first air flow cavity and the second chamber.

7. The camera structure according to claim 1, wherein the rear housing is mounted with a breathable valve in which a waterproof breathable membrane is provided, and the middle housing is further provided with a return valve which is a one-way valve only allowing air to flow from the second chamber to the first chamber.

8. The camera structure according to claim 3, wherein the middle housing is provided with a connector near the second circuit board, which connector having a first end connected to the second circuit board and a second end connected to a wire harness of the camera.

9. The camera structure according to claim 3, wherein the middle housing has a moisture-proof structure mounting hole in which the moisture-proof structure is press-fitted, and the outer circumference of the moisture-proof structure has a sealing device for sealing the connection between the moisture-proof structure and the middle housing.

10. An assembly method of a camera structure, wherein the camera structure comprises a front housing, a middle housing, and a rear housing; the camera has a circuit board; and a moisture-proof structure mounting hole is provided in the middle housing; the assembly method of the camera structure comprises:
S1: mounting a moisture-proof structure into the moisture-proof structure mounting hole;
S2: mounting a lens of the camera and a circuit board inside the front housing;
S3: providing the middle housing at a rear end of the front housing, and closing the front housing to form a first chamber; and
S4: providing the rear housing at the rear end of the middle housing to seal the middle housing to form a second chamber, wherein the first chamber and the second chamber communicate with each other via the moisture-proof structure.

11. The assembly method of a camera structure according to claim 10, wherein the method further comprises:
mounting a breathable valve to the rear housing so that the rear housing can communicate with the outside of the camera, wherein the breathable valve has a waterproof membrane provided therein.

12. The assembly method of a camera structure according to claim 10, wherein the circuit board comprises a first circuit board and a second circuit board, and the method further comprises: fixing a lens of the camera at a front end of the front housing, then fixing the first circuit board inside the front housing, and fixing the second circuit board inside the middle housing so that a predetermined distance exists between the first circuit board and the second circuit board when the front housing and the middle housing are fixed together.

13. The assembly method of a camera structure according to claim 12, wherein, in front of the step S3, the method further comprises: fixing a wire harness of the camera on the rear housing passing through a harness passage in the rear housing; connecting the harness to one end of a connector on the middle housing; and connecting the other end of the connector to the second circuit board through the middle housing.

14. The assembly method of a camera structure according to claim 10, wherein the step S1 comprises firstly pressing the moisture-proof structure into the moisture-proof structure mounting hole by a pressing-in post; then, taking the pressing-in post out, placing a sealing device in the moisture-proof structure mounting hole, and pressing a riveting post down by the pressing-in post to rivet the moisture-proof structure into the moisture-proof structure mounting hole.
